# EUROPEAN PATENT SPECIFICATION

(11) **EP 1 493 618 B1**
(45) Date of publication and mention of the grant of the patent: **23.04.2014**
(21) Application number: 04015663.0
(22) Date of filing: 02.07.2004
(51) Int. Cl.: B60N 2/70, B60N 2/72

(54) **Seat structure**
Sitzstruktur
Structure de siège

(30) Priority: 02.07.2003 DE 10329852
(43) Date of publication of application: 05.01.2005
(60) Divisional application: 11177011.1
(73) Proprietor: FICO CABLES LDA, 4471 Maia (PT)
(72) Inventor: Pinto Ribeiro, Susana Carla, 4470-263 Vermoim-Maia (PT)
(74) Representative: Hess, Peter K. G.

(56) References cited:
- EP-A1- 0 625 445
- EP-A1- 1 112 709
- EP-A1- 1 179 308
- WO-A-98/53723
- WO-A1-03/045732
- FR-A- 2 743 271
- GB-A- 1 133 804
- GB-A- 2 341 087
- GB-A- 2 342 286
- GB-A- 2 342 287
- JP-A- 2000 350 637
- US-A- 3 790 149
- US-A- 6 132 003
- US-A1- 2003 085 600

## Description

### 1. Field of the invention

The present invention relates to a seat structure for supporting a seat cushioning, in particular for seats of motor vehicles and a method for mounting a support structure in a seat frame. This seat structure preferably provides a seat frame and a support structure which is afterwards covered by a seat cushioning and a seat cover.

### 2. Background of the invention

Seat structures form the inner supporting structure of seats of all kinds. In seats of motor vehicles, this inner structure is formed by a support structure and a seat frame. At this construction consisting of seat frame and support structure, the cushioning and, if necessary, also a cover of the seat is mounted.

As mentioned above, this seat structure consists of a seat frame and a support structure. In a simple embodiment, the support structure only serves for supporting the cushioning. But also support structures are known which can be used at the same time as an arching mechanic. Such an arching mechanic serves for the adaptation of the support structure to the curvature of the back of a seated person. This arching mechanic can be manually as well as motively adjusted and, thus, adapted. Therefore, such a support structure used as an arching mechanic enhances the comfort of the known vehicle seats of simple construction. It is furthermore known to combine said support structure with massage components which also increase the comfort of the seat.

From the EP-A-0 552 904, a seat structure is known also comprising a seat frame and a support structure. This seat structure consists of at least two lateral wire elements connected via a plurality of transversely extending wire elements. In order to mount said support structure within the seat frame, a plurality of springs is used. These springs are respectively hung up in the same number in the lateral wire elements and in the adjacent portions of the seat frame. Since every spring has to be individually connected to the support structure and the seat frame, this installation is time-consuming and, thus, expensive.

A further seat structure is known from the EP-A-0 874 575. Also this seat structure comprises a seat frame in which a support structure is mounted. The seat frame is made of four-cornered hollow sections since such profiles provide sufficient stability for the whole seat structure. Within this hollow section, the support structure is mounted also comprised of lateral wire elements and a plurality of transverse wires. A certain number of transverse wires extends beyond the lateral wire elements to terminate there in hook-like shaped ends. In this case, the hooks are oriented in such a way that they can be hooked in the hollow section of the seat frame arranged in parallel to the plane of the support structure. To this end, holes are arranged in this side of the hollow section of the seat frame.

This way of mounting of the support structure within the hollow profile-shaped seat frame is connected to different disadvantages. It is possible on the one hand to form hooks having small curvature at the ends of the transverse wires. These small hooks are then only hooked in only one wall of the hollow section. Since the hooks only comprise a small curvature to be quickly hooked, they also provide only low support for the support structure. During use of such a seat structure, it therefore often occurs that the hooks of the support structure are released from the hollow section of the seat frame simply by the movement of the seated person. In this manner, the seat loses its stability and it is even possible that the support structure pierces through the cushioning. Thereby, not only the seat is destroyed but also injuries of the seated persons are probable.

It is also disadvantageous to shape the ends of the transverse wires in relative large hooks which engage the whole hollow section of the seat frame. The installation of these large hooks in the hollow section is time-consuming since the large hooks must be "threaded" with much skills through the whole frame. Thereby, the production time of the seat structure is increased which negatively effect the costs of the seat to be manufactured.

A still further seat structure is known from GB 2 342 286 A, which shows and describes a seat structure comprising the features of the preamble of independent claim 1.

It is the problem of the present invention to provide a seat structure of the kind set forth, which can be produced with low efforts and which at the same time provides a reliable inner structure of a seat of a motor vehicle.

### 3. Summary of the invention

The above problem is solved by a seat structure for supporting a seat cushioning as described in independent claim 19.

Such a seat structure for supporting a seat cushioning, in particular for motor vehicle seats, comprises a support structure having at least two lateral wire elements between which a plurality of transverse wires extends wherein at least two of said transverse wires extend beyond said lateral wire elements by means of connecting ends, and a seat frame at least partly surrounding said support structure wherein mounting means are rigidly arranged at the side of the seat frame directed to the support structure wherein said mounting means mount said support structure within said seat frame via a direct connection with said connecting end. In the seat structure according to the present invention, preferably a grid-like support structure is used. The support structure consists of at least two lateral wire elements and of transverse wires extending transversely thereto. These transverse wires extend on the one hand linearly or they comprise a curvilinear or a zigzag shape within the plane of the support structure. By this non-linear run, a springing or a complying of the support structure is enabled during loading and installation of said support structure. A certain number of transverse wires extends beyond the lateral wire elements in order to terminate in the connecting ends preferred according to the invention. These connecting ends comprise according to the invention different shapes as descried below. Besides the support structure, the seat structure according to the invention comprises a seat frame surrounding said support structure. The seat frame provides a stabilizing inner structure of the whole seat which withstands the strong loadings generated by a seated person as well as the loadings in case of an accident in the motor vehicle. To guarantee the stability, preferably according to the invention shaped or profiled seat frames are used. In order to mount the connecting ends and, thus, the support structure at these seat frames, mounting means are provided at the side of the seat frame directed to the support structure.

These mounting means are according to the invention on the one hand worked from the seat frame, that means they form an integral component of these seat frames. In this manner, the efforts of production for this seat frame and, thus, for the whole seat structure are minimized. On the other hand, the mounting means are installed as additional elements at the side of the seat structure directed to the support structure, as for example by spot welding, riveting or the same. The connecting ends are according to the invention directly mounted on the mounting means of the seat frame. That means that no intermediate springs or the same are used to provide the connection. By the arrangement of the integral mounting means at the side of the seat frame directed to the support structure, low installation efforts during manufacture of the seat structure as well as a reliable seat structure having the working life of a motor vehicle is provided. According to the present invention, the mounting means are integrally formed in the seat frame.

According to the present invention, the connecting ends comprise a hook structure the hook plane of which is substantially perpendicularly aligned to the adjacent lateral wire element. Further, the mounting means according to the invention comprise loops in which the hook structure is hooked.

To guarantee a simple but effective and reliable connection between the support structure and the seat frame, the connecting ends of the support structure are formed as hook structures and the mounting means of the seat frame are formed as loops. By the arrangement according to the invention of said loops at the side of the seat frame directed to the support structure, a hooking of the connecting ends without high working efforts is guaranteed. A reliable connection is furthermore guaranteed by the fact that the hook structure can sufficiently engage these loops whereby the support structure cannot be released from the seat frame by movements of the seated person or by other loadings. It is additionally not necessary to fasten the hook structure of the connecting ends through the whole hollow section of the seat frame whereby the installation time is reduced. According to a preferred embodiment of the invention mentioned above, the mounting means or loops comprise a notch structure. This notch structure is preferably according to the invention resiliently formed and dimensioned in such a way that the hook structure is received in this notch structure or it is even latched therein as soon as the hook structure is hung up in the loop. By this notch structure, an additional mounting or safety of the connecting ends in the mounting means is guaranteed.

According to a further preferred embodiment of the present invention, the loops comprise a profile to support the own stability and the stability of the seat frame.

The loops in the side of the seat frame directed to the support structure are subjected to high tensile loads which are applied by the seated person via the hooked up support structure. In order to withstand these loadings, the loops are preferably according to the invention shaped with profile. Such a shaped loop can only be bent or reshaped with high mechanical loads compared to a non-profiled loop. Further, this profiling supports preferably according to the invention the stability of the seat frame. These additional stabilizing effects are preferred according to the invention in order to counteract the weakening of the seat frame by the integral forming of the mounting means. By the preferred formation according to the invention of the loops, however, forces are received and deviated without reducing the stability of the seat frame.

According to a further preferred embodiment of the present invention, the loops are substantially arranged within the plane of the side of the seat frame directed to the support structure or they extend beyond this plane in the direction of the support structure.

Depending on the space in the seat structure, the loops are preferably according to the invention arranged in a common plane with the related side of the seat frame. By this arrangement, connecting ends of low extent preferably according to the invention mounted in the seat frame. In case the loops preferably according to the invention extend beyond the plane of the side of the seat frame directed to the support structure, thereby the installation of the support structure within the seat frame is supported.

According to a further preferred embodiment, the projections comprise a profile to support the own stability.

As already mentioned above, the shaping of the loops and the projections serves for the increasing of stability. Preferably according to the invention, they can withstand higher mechanical loads in this manner and, thus, secure a high working life of the seat structure.

According to a further preferred embodiment of the present invention, the projections are substantially arranged within the plane of the side of the seat frame directed to the support structure or they extend beyond this plane in the direction of the support structure.

The present invention further comprises a method for mounting a support structure in a seat frame of a seat of a vehicle according to claim 5, comprising the following steps: expanding the support structure in a direction substantially parallel to the lateral connecting ends against an inner spring force of the support structure; mounting of the connecting ends on at least one mounting means by displacing the support structure in the plane surrounded by the seat frame wherein the mounting means is rigidly arranged at one side of the seat frame directed to the support structure; and shortening of the support structure based on the inner spring force substantially parallel to the direction of the lateral connecting ends so that the support structure is retained by itself in the seat frame.

Compared to the prior art, the support structure according to the invention is installed by an efficient three-step-method while known methods comprise at least four steps. The method according to the invention comprises first an elongating or stressing of the support structure in lateral direction. Afterwards, a displacing of the elongated support structure into the plane of the seat frame takes place whereby the connecting ends are connected to the mounting means. Finally, the support structure is relieved so that it fixes itself in the seat frame. In opposite thereto, a further displacing of the support structure is necessary in the prior art within the plane surrounded by the seat frame in order to hook in each other the mounting means and the connecting ends based on their orientation.

According to the invention the connecting ends comprise a hook structure the hook plane of which is essentially perpendicular to an adjacent lateral wire element wherein said hook structure is hooked in a loop forming said mounting means.

### 4. Short description of the accompanying drawings (the embodiments of FIG.4-7 do not form part of the invention but represent background art that is useful for understanding the invention).

The present invention is described with reference to the accompanying drawings It is shown:
- Figure 1: shows a seat structure according to a preferred embodiment of the present invention having a seat frame and an inner support structure;
- Figure 2: shows an enlarged illustration of the mounting means according to a preferred embodiment of the present invention;
- Figure 3: shows an enlarged illustration of the preferred notch structure according to the invention in said mounting means; and
- Figure 4: shows an enlarged illustration of other connecting ends and mounting means;
- Figure 5a, b: shows an illustration of further connecting ends and mounting means;
- Figure 6a, b: shows an illustration of still further connecting ends and mounting means; and
- Figure 7a-c: shows an illustration of still another connecting ends and mounting means.

### 5. Detailed description of the preferred embodiments

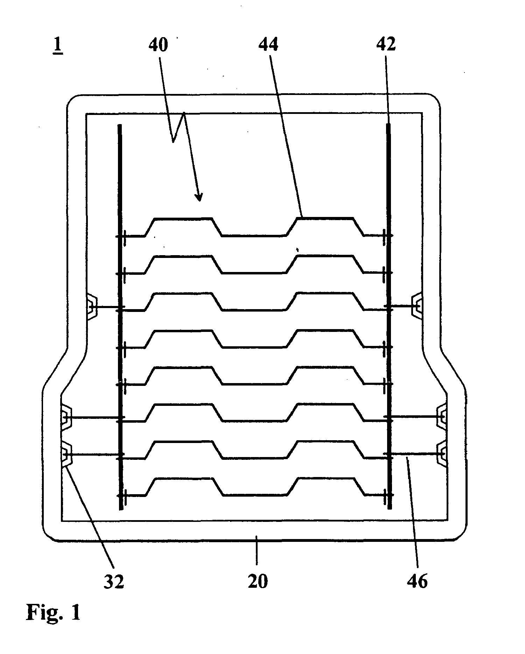

The seat structure 1, which is shown according to a preferred embodiment of the present invention in Figure 1, forms an inner structure of a seat, in particular of motor vehicle seats. Preferably according to the invention, it comprises a seat frame 20 and a support structure 40 mounted within the seat frame 20. Preferably according to the invention, the seat frame 20 and the support structure 40 are made of a stable material, as metal or plastic material. Similar materials are also preferred according to the invention as long as they are sufficiently stable comprising the corresponding flexibility for the inner seat structure 1 and as long as they can be connected to each other with low technical efforts.

The seat frame 20 is preferably formed according to the invention by a shaped metal part. According to a preferred embodiment of the present invention, as shown in Figure 1, this seat frame 20 forms a closed structure. It is, however, also preferred according to the invention to form the seat frame 20 as an open structure having an oval or a multi-cornered shape. This shape of the seat frame 20 is determined by the later desired shape of the seat. Beside the use of hollow sections to form the seat frame 20, also other shapes or profiles are installed preferably according to the invention since they give the desired mechanical stability to the seat frame 20. Such profiles or shapes are preferably T- or H-profiles or similar known plane profiles. The stability of the seat frame 20 guarantees a secured support for the seated person, in particular for its back. Additionally, by this stability a substantial safety aspect is realized since a failure of the seat frame is prevented during an accident. By the stability of the seat frame 20 it is additionally guaranteed that it cooperates with the safety belt and the airbag of the motor vehicle and, thus, reduces the danger of injuries of the seated person in case of an accident.

The shape or profile of the seat frame 20 is preferably according to the invention designed in such a way that one side 30 of the seat frame 20 is directed to the support structure 40 boarded or surrounded by the seat frame 20. This side 30 of the seat frame 20 is preferably according to the invention used for the simple but reliable mounting of the support structure 40 within the seat frame 20.

The preferred support structure 40 according to the invention comprises a simple but effective grid-like structure. In cooperation with the seat frame 20, it supports and bears the cushioning of the motor vehicle seat. Over this cushioning, in most cases a seat cover is arranged. Beside the above mentioned functions, the support structure 40 stabilizes the back of a seated person and it partly adapts itself to the shape of the back of this person by its resilient effect.

Preferably according to the invention, the support structure 40 comprises at least two substantially vertically extending wire elements 42. It is, however, also preferred according to the invention that these wire elements 42 are arranged in a sloped fashion or they convert. Preferably according to the invention, two of these wire elements 42 are laterally arranged. It is, however, also preferred to arrange a plurality of these wire elements 42 within the support structure 40. These wire elements 42 are covered or coated with paper or plastic material so that a coating is formed which prevents a later shifting of the transverse wires 44 fastened thereon. The transverse wires 44 preferably according to the invention transversely extend to the wire elements 42. They are fastened by simply winding said wire elements 42. This fastening has the advantage that it can be simply performed and that no additional fastening means are necessary. These transverse wires 44 preferably according to the invention extend linearly or curvilinearly between said wire elements 42. By this run of the transverse wires 44, the support structure 40 can laterally expand whereby a simplified installation in the seat frame 20 is enabled. Additionally, it is made possible by the run of the transverse wires 44 that the support structure 40 resiliently complies like a cushion if loaded by a seated person.

At least transverse wires 44, as shown in Figure 1, extend beyond the lateral wire elements 42. They terminate preferably according to the invention in connecting ends 46 which are used for the mounting of the support structure 40 at the inner side 30 of the seat frame 20. To realize the mounting of the connecting ends 46 at the side 30 of the seat frame 20 directed to the support structure 40, mounting means 32 are arranged at this side 30. These mounting means 32 are according to the invention integrally formed in the seat frame 20. Integral means in this context that the mounting means 32 are worked out from the side 30 of the seat frame 20. This way of manufacturing has the advantage that several manufacturing steps can be saved and thereby a cost effective production of the seat structure 1 follows.

The arrangement of the mounting means 32 on the inner side 30 respectively on the side 30 of the seat frame 20 directed to the support structure 40 has different advantages. It enables easy access to the mounting means 32 for mounting the support structure 40 thereon. Additionally, a low strain of the support structure 40 is necessary to hang up the same in the mounting means 32. By this simple construction, the manufacturing effort for the seat structure 1 is minimized particularly during installing the support structure 40 within the seat frame 20. Despite this simple construction and the effective manufacture, a seat structure 1 is realized which guarantees a stable support for the seated person. For mounting the support structure 40 within the seat frame 20, according to the invention said connecting ends 46 are connected with said mounting means 32. The resulting long-life and reliable connection is guaranteed by different preferred embodiments according to the invention of said connecting ends 46 and said mounting means 32. According to the present invention, the connecting ends 46 terminate in a hook structure 48. These hook structures 48 comprise a circular, an oval or a cornered shape wherein the legs of the hook structure 38 have to be sufficiently long to reliably fasten the hook structure 48 in said mounting means 32. The hook structure 48 encloses by its legs or by its circular, cornered or oval shape a hook plane which is preferably according to the invention oriented substantially perpendicularly to the plane of the support structure 40.

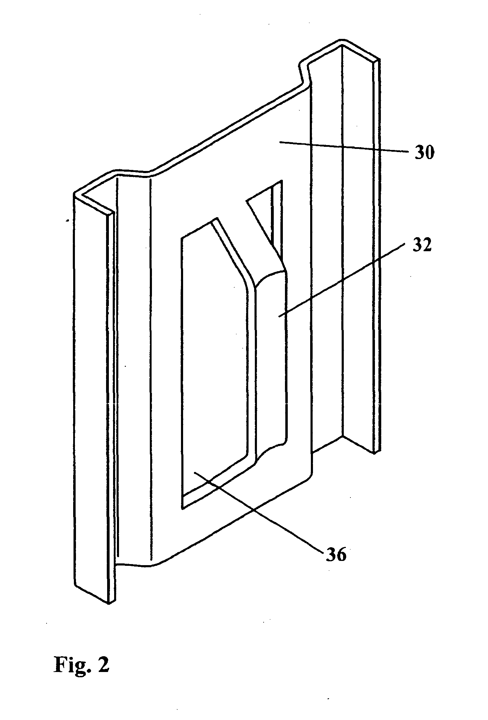

The above mentioned hook structure 48 is according to the invention fastened in the mounting means 32 at the inner side 30 of the seat frame 20. This mounting means 32 is according to the invention formed by a loop. This loop 32, as shown in Figure 2, comprises a closed shape. According to the invention, this loop 32 is integrally worked out from the inside 30 of the seat frame 20. The hook structure 48 of the connecting ends 46 are hooked in these loops 32. In order to increase the stability of the loops 32, they are preferably according to the invention shaped or profiled. This profile or shape can be realized by a cornered or round or curvilinear profile. By this profiling, the forces applied by the support structure 40 are received by the loop 32 and they are deviated in the seat frame 20 preferably according to the invention. Additionally, a low compliance of the loop 32 follows from the profiling or shaping of the loop 32 and, thus, a safe mounting of the support structure 40 within the seat frame 20 is realized.

According to a further preferred embodiment, the loops 32 extend beyond the plane of the inner side 30 of the seat frame 20. It is, however, also preferred according to the invention that the loops 32 are arranged in the same plane as the inner side 30 of the seat frame 20. As can be seen in Figure 2, the loops 32 are preferably according to the invention arranged in a window 36. This window 36 supports an easy access of the hook structure 46 to the loop 32 to install the loop structure 46 with low efforts. By the size of the window 36, it is guaranteed that the hook structure 46 does not collide during the hooking in the loop 32 with the inner side 30 of the seat frame 20.

If, as mentioned above, the loop 32 is arranged in the plane of the inner side 30 of the seat frame 20, it is preferred according to the invention that the window 36 is formed with lower extent having the shape of an elongated hole or slot in parallel alignment with the hook plane. The loop 32 is then preferably according to the invention formed by a short profiled or non-profiled bridging of this elongated hole. In this preferred embodiment, the loop 32 can therefore also be indicated as a web. The elongated hole or the slot must only have such a size that the hook structure 48 of the connecting ends 46 can be installed therein and that they can then hook in the loop 32. Beside the simple construction and the effective and long lasting mounting, the further advantage follows that the structure of the seat frame 20 is only slightly or not weakened at all by the window 36. Thereby, it is preferably according to the invention prevented that the seat frame 20 brakes in case of an accident of a motor vehicle.

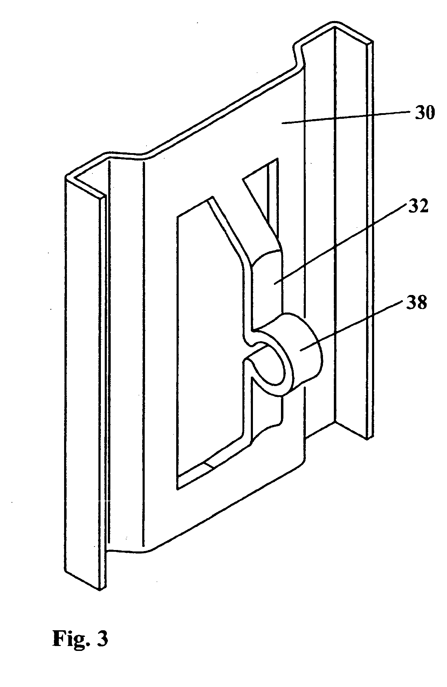

According to a further preferred embodiment of the present invention, the loop 32 comprises an additional fastening or an additional safety construction of the hook structure 48 of the connecting ends 46 having the shape of a notch structure 38. The same is exemplarily shown in Figure 3. The preferred notch structure 38 according to the invention is made of a resilient material like the loop 32. The notch structure 38 is formed by a recess or an enclosure the dimension of which are adapted to the diameter of the material of the hook structure 48 of the connecting ends 46. If the hook structure 48 of the connecting ends 46 is installed in the loop 32, it is received from the formed recess or notch of the notch structure 38. The notch structure 38 guarantees an additional safety construction of the mounting of the support structure 40 within the loops 32. The notch structure 38 is also preferably according to the invention configured in such a way that the hook structure 48 of the connecting ends 46 can engage or latch therein.

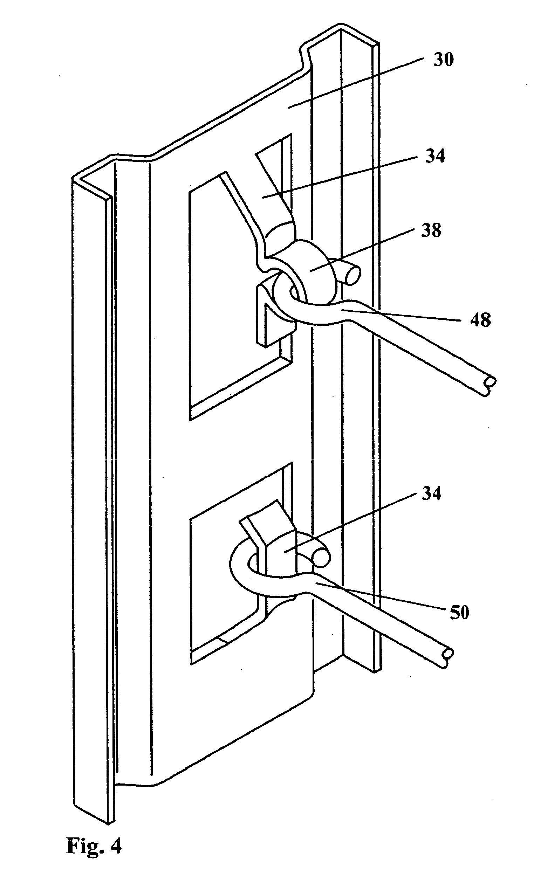

According to an embodiment, the mounting means 32 of the seat frame 20 are configured as projections or webs 34, as shown in Figure 4. These projections or webs 34 are similarly arranged in windows 36 as the loops 32. It is also possible to arrange the projections 34 in such a way that they extend beyond the side 30 of the seat frame 20 which is directed to the support structure 40 as shown in Figure 4. The projections 34 are arranged within the plane of the inner side 30 of the seat frame 20 (not shown). These projections 34 form something like a tongue within the window 36 in which the connecting ends 46 hook in. To this end, the connecting ends 46 comprise the hook structure 48 already mentioned above or they are configured as loop structure 50. This loop structure 50 comprises an opening having cornered, circular or oval shape. The plane enclosed by the opening is substantially perpendicularly oriented to the plane of the support structure 40.

In order to increase the stability of the projections 34, the same are shaped or profiled. In this embodiment, the same profiles or shapes can be used as already described above in the context of the loops 32. Furthermore, it is, however, also possible to form the projections 34 with no profile if at the same time a sufficient stability of the mounting of the support structure 40 within the seat frame 20 is guaranteed.

It is further possible to provide the projections 34 with the already above described notch structure 38. This notch structure 38 guarantees an additional secured support of the hook structure 48 or the loop structure 50 of the connecting ends 46 in the same manner as in connection with the loop 32.

For the mounting according to the invention of the support structure 40 within the seat frame 20, several loops 32 are arranged on one side of the seat frame 20, as shown in Figure 1. The loops 32 extend preferably according to the invention substantially parallel to the plane of the support structure 40 mounted in the seat frame 20. In case the projections 34 are used for the mounting of the support structure 40, they are oriented opposed to each other. The opposed orientation of the projections 34 indicates the case in which at least two of the projections 34 on one side of the seat frame 20 are arranged in such a way that their free ends are directed to each other. An exemplary illustration of this embodiment is depicted in Figure 4. This arrangement has the essential advantage that the support structure 40 cannot be released from the seat frame 20 by a mechanical overload in the direction of one projection 34. In this case, the mounting of the support structure 40 within the seat frame 20 is secured by the opposed oriented projections 34.

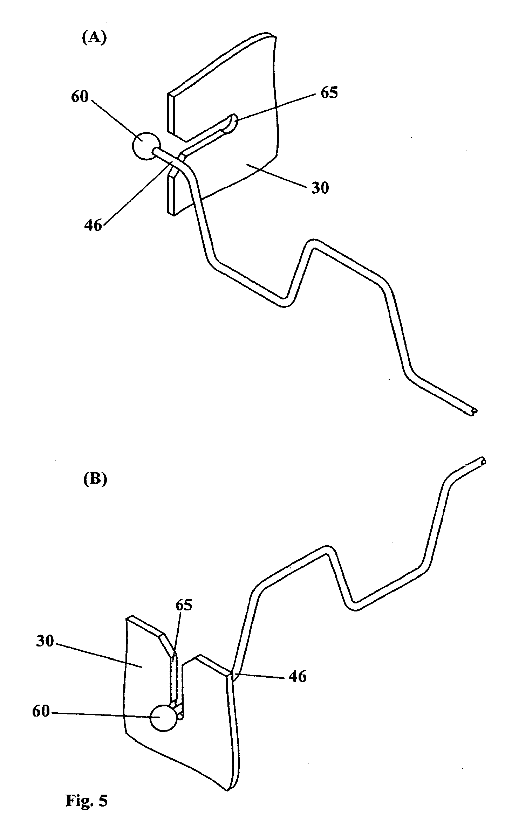

According to a further embodiment shown in Figure 5, the connecting ends 46 comprise enlarged ends 60 formed thereon. These ends 60 are made of a plastic material, metal or similar materials qualified by sufficient stability, durability and wear-resistance. The ends 60 are connected by fusing or injecting. To this end, the connecting ends 46 are bent similar to a barb for supporting the mounting of the ends 60.

The connecting ends 46 with the ends 60 n slit-shaped openings 65 in the seat frame 20 arranged at the inner side 30 of the seat frame 20 as mounting means 32. The slit-shaped openings 65 are more narrow configured than the circumference of the ends 60. Correspondingly, any configuration is possible as shape for the ends 60 which enables retaining of the ends 60 by means of the slit-shaped opening 65.

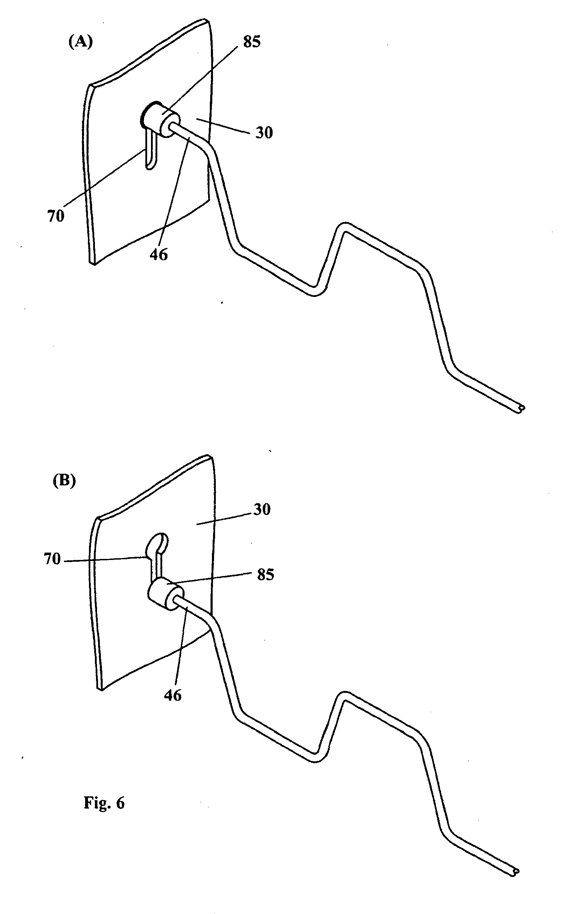

The slit-shaped opening 65 runs linearly while comprising at one of its ends a broadening for receiving and mounting the connecting ends 46. The slit-shaped openings 65 are oriented substantially perpendicularly, parallel or inclined with respect to the plane of the support structure 40. It is furthermore possible to configure the slit-shaped opening 65 having a curvilinear or a cornered run as long as the connecting ends 46 are reliably retained by the seat frame 20 in this manner. It is further possible to provide the slit-shaped opening 65 similar to a keyhole opening 70 as shown in Figure 6. The keyhole opening 70 also provides a slit-shaped opening broadened in its end portion in order to receive and to retain the end 60 or a suitably shaped connecting end 46. Starting from the expanded or broadened end, the keyhole opening 70 tapers so that the connecting ends 46 are retained.

The keyhole opening 70 cooperates with an end 60 of sufficient broad configuration. It is also possible to let the connecting end 64 terminate in transversely bent ends so that it is reliably retained in the keyhole opening 70 or in the slit-like opening 65.

According to a further embodiment, as shown in figure 6, said keyhole opening 70 cooperates with a counter element 85 made of plastic material, metal or a similar stable material. This counter element 85 is mounted on the connecting end 46 shortly before the end 60. After installing the connecting end 46 having said formed end 60 and said counter element 85 in the inner side 30 of the seat frame 20, the connecting end 46 is retained in the keyhole opening 70 of the inner side 20 by the cooperation of the formed end 60 and the counter element 85. The counter element 85 generates a clamping effect to prevent a loosening, a shifting or a releasing of the support structure 40 from the seat frame 20.

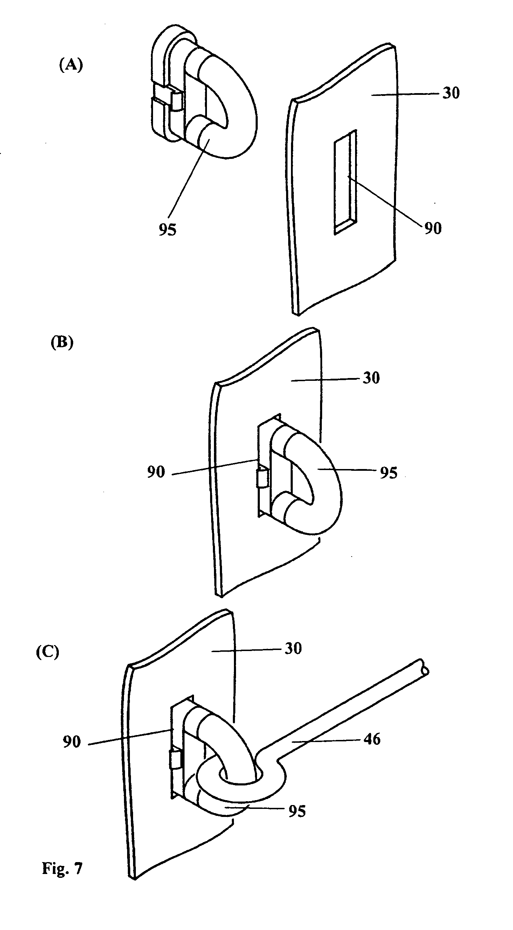

According to a further embodiment shown in Figure 7, the inner side 30 of the seat frame 20 comprises slots 90. These slots 90 are configured in such a way that they retain an insertable loop element 95. This loop element 95 is installed from the side of the seat frame 20 directed away from the inner side 30 and it is independently latched in the seat frame 20. This latching is realized by a latch shape which comprises the loop element 95. It is also possible to provide snapping hooks retaining the loop element 95 in the seat frame 20. The loop element 95 is made of metal, plastic material or a similar material resisting the mechanical loading in the seat frame 20. As soon as the loop element 95 is installed in the slot 90 of the seat frame 20, the hook structure 48 of the connecting ends 46 is hooked in and the support structure is mounted in this manner in the seat frame 20.

The present invention further comprises an advantageous three-step-method in order to install the support structure 40 according to the above mentioned preferred embodiments in the seat frame 20. The advantage compared to the prior art consists in the fact that the mounting means 32, are adapted in their shape and orientation to the configuration of the connecting ends 46. Thereby only a displacing of the support structure 40 is carried out essentially in the plane substantially surrounded by the seat frame 20 after the lateral expanding of the support structure 40. Within this plane, however, preferably according to the invention no further displacing of the support structure 40 essentially parallel to the sides of the seat frame 20 is executed to establish a connection. In this manner, work steps while assembling the seat structure as well as time are saved leading to a cost-effective construction.

### List of reference signs

- 1: Seat structure
- 20: Seat frame
- 30: Inner side of the seat frame
- 32: Mounting means, loops
- 34: Projections
- 36: Window
- 38: Notch structure
- 40: Support structure
- 42: Vertical wire element
- 44: Transverse wires
- 46: Connecting end
- 48: Hook structure
- 50: Loop structure
- 60: Enlarged ends
- 65: Slit-shaped opening
- 70: Keyhole opening
- 80: Plate
- 85: Counter-element
- 90: Slot
- 95: Loop element

## Claims

1. A seat structure (1) for supporting a seat cushioning, in particular for motor vehicle seats, comprising:
a. a support structure (40) having at least two lateral wire elements (42) between which a plurality of transverse wires (44) extends curvilinearly, wherein
b. at least two of said transverse wires (44) extend beyond the lateral wire elements (42) terminating in connecting ends (46);
c. a seat frame (20) at least partly surrounding said support structure (40), wherein said connecting ends (46) are attached at the inside (30) of said seat frame (20) directed to said support structure (40)and
d. mounting means (32) are rigidly arranged at the inside (30) of said seat frame (20) directed to said support structure (40), which mount said support structure (40) within said seat frame (20) by means of a direct connection with said connecting ends (46);
**characterized in that**
e. said connecting ends (46) comprise a hook structure (48);
f. the planes of the hook structure (48) are substantially perpendicularly aligned to the adjacent lateral wire element (42);
g. said mounting means (32) are integrally worked out from the inside (30) of said seat frame (20) and comprise a window (36) and a closed loop (32), which is formed by a web bridging said window (36);
h. said hook structure (48) of said connecting ends (46) is directly hooked in said closed loop (32).

2. The seat structure (1) according to claim 1, wherein said mounting means (32) comprise a notch structure (38) in which the connecting ends (46, 48) are received or latched.

3. The seat structure (1) according to claim 1, wherein the loop (32) comprises a profile or a shape in order to support the own stability and the stability of the seat frame (20).

4. The seat structure (1) according to claim 3, wherein the loop (32) is arranged substantially within the plane of the side (30) of the seat frame (20) directed to the support structure (40) or wherein the loops (32) extend beyond this plane in direction of the support structure (40).

5. A method for mounting a support structure (40) in a seat frame (20) of a seat of a vehicle according to one of the preceding claims, comprising the following steps:
a. expanding the support structure (40) in a direction essentially parallel to lateral connecting ends (46) against an inner spring force of the support structure (40);
b. mounting of the connecting ends (46) on at least one mounting means (32; 65) by displacing the support structure (40) into the plane surrounded by the seat frame (20) wherein the mounting means are rigidly arranged at a side (30) of the seat frame (20) directed to the support structure (40); and
c. shortening of the support structure (40) based on the inner spring force essentially parallel to the direction of the lateral connecting ends (46) so that the support structure (40) retains itself in the seat frame (20).

## Patentansprüche

1. Eine Sitzstruktur (1) zum Stützen einer Sitzpolsterung, insbesondere für Kraftfahrzeugsitze, aufweisend:
a. eine Stützstruktur (40), welche mindestens zwei seitliche Drahtelemente (42) aufweist, zwischen denen sich eine Mehrzahl von quer verlaufenden Drähten (44) kurvenförmig erstreckt; wobei
b. sich mindestens zwei der quer verlaufenden Drähte (44) über die seitlichen Drahtelemente (42) hinaus erstrecken, und wobei die mindestens zwei quer verlaufenden Drähte (44) in Verbindungsenden (46) münden;
c. einen Sitzrahmen (20), welcher zumindest teilweise die Stützstruktur (40) umgibt, wobei die Verbindungsenden (46) an der Innenseite (30) des Sitzrahmens (20) befestigt sind, wobei die Innenseite (30) zu der Stützstruktur (40) hin weist; und
d. Befestigungsmittel (32), welche fest an der Innenseite (30) des Sitzrahmens (20) befestigt sind, wobei die Innenseite (30) zu der Stützstruktur (40) hin weist, wobei die Befestigungsmittel (32) die Stützstruktur (40) innerhalb des Sitzrahmens (20) mittels einer direkten Verbindung mit den Verbindungsenden (46) befestigen, **dadurch gekennzeichnet, dass**
e. die Verbindungsmittel (46) eine Hakenstruktur (48) aufweisen;
f. die Flächen der Hakenstruktur (48) im Wesentlichen senkrecht zu dem benachbarten seitlichen Drahtelement (42) ausgerichtet sind;
g. wobei die Befestigungsmittel (32) als integraler Bestandteil aus der Innenseite (30) des Sitzrahmens (20) herausgearbeitet sind, wobei die Befestigungsmittel (32) ein Fenster (36) und eine geschlossene Öse (32) aufweisen, welche durch einen Steg ausgebildet wird, der das Fenster (36) überspannt;
h. wobei die Hakenstruktur (48) der Verbindungsenden (46) direkt in die geschlossene Öse eingehakt wird.

2. Die Sitzstruktur (1) gemäß Anspruch 1, wobei die Befestigungsmittel (32) eine Einbuchtungsstruktur (38) aufweisen, welche die Verbindungsenden (46, 48) aufnehmen oder in welche die Verbindungsenden (46, 48) eingeklinkt werden.

3. Die Sitzstruktur (1) gemäß Anspruch 1, wobei die Öse (32) ein Profil oder eine Form aufweist, um die eigene Stabilität und die Stabilität des Sitzrahmens (20) zu unterstützen.

4. Die Sitzstruktur (1) gemäß Anspruch 3, wobei die Öse (32) im Wesentlichen innerhalb der Ebene der Seite (30) des Sitzrahmens (20), welche zu der Stützstruktur (40) hin weist, angeordnet ist, oder wobei sich die Ösen (32) über diese Ebene hinaus in Richtung der Stützstruktur (40) erstrecken.

5. Ein Verfahren zum Befestigen einer Stützstruktur (40) in einem Sitzrahmen (20) eines Fahrzeugsitzes gemäß einem der vorangegangenen Ansprüche, aufweisend die nachfolgenden Schritte:
a. ein Ausdehnen der Stützstruktur (40) in einer zu den seitlichen Verbindungsenden (46) im Wesentlichen parallelen Richtung entgegen einer Federkraft der Stützstruktur (40);
b. ein Befestigen der Verbindungsenden (46) an mindestens einem Befestigungsmittel (32, 65) durch ein Verlagern der Stützstruktur (40) in die Ebene, welche von dem Sitzrahmen (20) umgeben wird, wobei die Befestigungsmittel fest an einer Seite (30) des Sitzrahmens (20) angeordnet sind, wobei die Seite (30) zu der Stützstruktur (40) hin weist; und
c. ein Verkürzen der Stützstruktur (40) basierend auf der inneren Federkraft im Wesentlichen parallel zu der Richtung der seitlichen Verbindungsenden (46), so dass sich die Stützstruktur (40) selbst in dem Sitzrahmen (20) fixiert.

## Revendications

1. Une structure de siège (1) pour supporter une garniture de siège, en particulier pour des sièges de véhicules automobiles, comprenant :
a. une structure-support (40) avec au moins deux éléments en fil latéraux (42) entre lesquels s'étend de façon curviligne une pluralité de fils transversaux (44), où
b. au moins deux desdits fils transversaux (44) s'étendent au-delà des éléments en fil latéraux (42) en se terminant par des extrémités de liaison (46) ;
c. un cadre de siège (20) entourant au moins partiellement ladite structure-support (40), lesdites extrémités de liaison (46) étant montées sur l'intérieur (34) dudit cadre de siège (20) en direction de ladite structure-support (40) ; et
d. des moyens de montage (32) sont rigidement disposés à l'intérieur (30) dudit cadre de siège (20) en direction de ladite structure-support (40), qui assurent le montage de ladite structure-support (40) à l'intérieur dudit cadre de siège (20) par l'intermédiaire d'une liaison directe avec lesdites extrémités de liaison (46) ;
**caractérisée en ce que** :
e. lesdites extrémités de liaison (46) comprennent une structure en crochet (48);
f. les plans de la structure en crochet (48) sont alignés substantiellement perpendiculairement à l'élément en fil latéral adjacent (42) ;
g. lesdits moyens de montage (32) sont formés monobloc à partir de l'intérieur (30) dudit cadre de siège (20) et comprennent une fenêtre (36) et une boucle fermée (32), qui est formée par une poutre passant au-dessus de ladite fenêtre (36) ;
h. ladite structure en crochet (48) desdites extrémités de liaison (46) est directement accrochée dans ladite boucle fermée (32).

2. La structure de siège (1) de la revendication 1, dans laquelle lesdits moyens de montage (32) comprennent une structure en encoche (38) dans laquelle sont logées ou verrouillées les extrémités de liaison (46, 48).

3. La structure de siège de la revendication 1, dans laquelle la boucle (32) comprend un profil ou une forme pour soutenir sa stabilité propre et la stabilité du cadre de siège (20).

4. La structure de siège (1) de la revendication 3, dans laquelle la boucle (32) est disposée substantiellement à l'intérieur du plan du côté (30) du cadre de siège (20) dirigé vers la structure-support (40), ou dans laquelle les boucles (32) s'étendent au-delà de ce plan dans la direction de la structure-support (40).

5. Un procédé de montage d'une structure-support (40) dans un cadre de siège (20) d'un siège d'un véhicule selon l'une des revendications précédentes, comprenant les étapes suivantes :
a. l'extension de la structure-support (40) dans une direction essentiellement parallèle aux extrémités de liaison latérales (46) à l'encontre d'une force d'un ressort intérieur de la structure-support (40) ;
b. le montage des extrémités de liaison (46) sur au moins un moyen de montage (32 ; 65) par déplacement de la structure-support (40) jusque dans le plan entouré par le cadre de siège (20) où les moyens de montage sont rigidement disposés sur un côté (30) du cadre de siège (20) dirigé vers la structure-support (40) ; et
c. le raccourcissement de la structure-support (40) en fonction de la force du ressort intérieur essentiellement parallèlement à la direction des extrémités de liaison latérales (46) de sorte que la structure-support (40) se retienne d'elle-même dans le cadre de siège (20).
